# EUROPÄISCHE PATENTANMELDUNG

(11) **EP 1 493 531 A1**
(43) Veröffentlichungstag der Anmeldung: **05.01.2005**
(21) Anmeldenummer: 03015022.1
(22) Anmeldetag: 02.07.2003
(51) Int. Cl.: B23Q 11/08, B23Q 3/155

(54) **Einrichtung zum Abtrennen eines ersten Raumes gegenüber einem angrenzenden zweiten Raum**

(71) Anmelder: Alfing Kessler Sondermaschinen GmbH, 73433 Aalen (DE)
(72) Erfinder: Hansch, Stefan Dr.-Ing., 73434 Aalen (DE)
(74) Vertreter: HOFFMANN - EITLE

(57) **Zusammenfassung**

Bei einer Einrichtung zum Abtrennen eines ersten Raumes gegenüber einem angrenzenden zweiten Raum, welche mindestens zwei Abtrennelemente (16, 17) umfasst, die von einer Schließstellung, in der sie im wesentlichen eine Abtrennwand (14, 15) bilden, in eine Offenstellung und zurück bewegbar sind, werden erfindungsgemäß die Abtrennelemente (16, 17) biegsam ausgebildet, im Bereich ihrer einander zugewandten Seiten frei beweglich gestaltet und im Bereich ihrer diesen Seiten gegenüberliegenden Seiten eingespannt.

## Beschreibung

Die vorliegende Erfindung betrifft eine Einrichtung zum Abtrennen eines ersten Raumes gegenüber einem angrenzenden zweiten Raum, umfassend mindestens zwei Abtrennelemente, die von einer Schließstellung, in der sie im Wesentlichen eine Abtrennwand bilden, in eine Offenstellung und zurück bewegbar sind.

Derartige Einrichtungen werden überall dort benötigt, wo einerseits zwei voneinander getrennte Räume vorgesehen werden müssen, andererseits jedoch eine Übergangsmöglichkeit von dem einen Raum in den anderen Raum zwingend gegeben sein muss.

Ein typisches Anwendungsbeispiel für derartige Einrichtungen liegt auf dem Gebiet der Werkzeugmaschinen. Dort ist es erforderlich einerseits einen Raum für die Bearbeitung des oder der Werkstücke (Bearbeitungsraum), andererseits jedoch einen weiteren Raum für das Werkzeugmagazin und den Wechsel der Bearbeitungswerkzeuge (Magazinraum) vorzusehen. Dieser Magazinraum muss zwar gegenüber dem Bearbeitungsraum abgeschlossen, jedoch beispielsweise für eine Bearbeitungsspindel zum Werkzeugwechsel zugänglich sein.

Für den oben beschriebenen Anwendungsbereich haben sich bei derartigen Einrichtungen Abtrennwände bewährt, die mindestens zwei Abtrennelemente umfassen, welche über einen Antrieb von einer Schließstellung in eine Offenstellung und zurück bewegbar sind. Diese Abtrennelemente bestehen meist aus Klappen und Flügeln, die über eine Hebelanordnung mit einem Antrieb verbunden sind. Dieser Antrieb ist mit einer Steuerung ausgestattet, die ihrerseits mit der Steuerung der Werkzeugmaschine gekoppelt sein muss, damit die Klappen oder Flügel stets nur kurzzeitig für den Durchtritt der Bearbeitungsspindel geöffnet werden und auf diese Weise verhindert wird, dass beim Bearbeitungsvorgang anfallende Späne, Schmier- oder Kühlmittel von dem Bearbeitungsraum in den Raum für den Werkzeugwechsel gelangen kann.

Aufgabe der vorliegenden Erfindung ist es, eine Abtrenneinrichtung zu schaffen, die einfach aufgebaut ist und ohne einen aufwendigen Steuerungsmechanismus für das Öffnen und Schließen auskommt.

Diese Aufgabe wird erfindungsgemäß bei einer Einrichtung der gattungsgemäßen Art dadurch gelöst, dass die Abtrennelemente biegsam ausgebildet, im Bereich ihrer zugewandten Seiten frei beweglich und im Bereich ihrer diesen Seiten entgegengesetzten Seiten eingespannt sind.

Der Erfindung liegt der Gedanke zugrunde, durch die biegsame Ausgestaltung und die spezielle Beweglichkeit und Einspannung eine Art nachgiebige Abtrennwand zu schaffen, die bei Berührung ausweicht und dadurch eine Übergangsmöglichkeit von einem in den anderen Raum schafft, ohne dass hierzu aufwendige Betätigungs- und Steuerungsmittel erforderlich sind. Nach dem Durchtritt kehren die Abtrennelemente aufgrund ihrer Elastizität wieder in ihre Ausgangsstellung zurück, so dass die Räume wieder gegeneinander abgetrennt sind. Von besonderem Vorteil ist dabei, dass zum einen die Zeit, in der die Antrennwand geöffnet ist, auf das mögliche Minimum beschränkt wird und andererseits nur so viel Fläche geöffnet wird, wie dies für den Durchtritt bzw. den Übergang erforderlich ist. Die übrige Fläche bleibt dabei im Gegensatz zu bekannten Lösungen vollkommen geschlossen.

Im Falle des eingangs beschriebenen Anwendungsbeispiels auf dem Gebiet der Werkzeugmaschinen bewegt sich die Bearbeitungsspindel nach abgeschlossener Bearbeitung in Richtung der Abtrennwand, drückt die biegsam ausgebildeten Abtrennelemente beiseite und gelangt in den Magazinraum für den Werkzeugwechsel.

Nach dem Passieren der Abtrennwand kehren die Abtrennelemente selbsttätig wieder in ihre Ausgangsstellung zurück und verschließen auf diese Weise den Magazinraum wieder gegenüber dem Bearbeitungsraum. Spezielle Betätigungs- und Steuerungsmittel sind hierfür nicht erforderlich. Die Betätigung erfolgt ausschließlich durch die Bearbeitungsspindel und das eingesetzte Werkzeug. Nach dem Werkzeugwechsel läuft der Vorgang in der entgegengesetzten Reihenfolge wieder in der Weise ab, dass die Werkzeugspindel mit dem eingewechselten neuen Werkzeug die biegsam ausgebildeten Abtrennelemente beiseite schiebt und vom Magazinraum wieder in den Bearbeitungsraum gelangt.

Dadurch, dass die Bearbeitungsspindel mit dem jeweiligen Bearbeitungswerkzeug die Abtrennelemente selbst und direkt betätigt, ist die Abtrennwand stets nur für den kürzest möglichen Zeitraum geöffnet. Auch wird nur so viel Fläche in der Abtrennwand geöffnet, wie es für die jeweils eingesetzte Bearbeitungsspindel und dem durch diese getragenen Bearbeitungswerkzeug erforderlich ist. Die übrige Fläche der Abtrennwand bleibt geschlossen. Verschmutzungen des Magazinraumes durch Späne, Schmier- oder Kühlmittel bleiben dadurch auf ein Minimum beschränkt und können sogar bei spezieller Ausgestaltung der Abtrennwand praktisch vollständig vermieden werden.

Grundsätzlich können die Abtrennelemente im Bereich ihrer einander zugewandten Seiten je nach Anwendungszweck in der verschiedensten Weise angeordnet sein. So kann es zweckmäßig sein, dass die Abtrennelemente mit ihren einander zugewandten Seiten einen schmalen Spalt bilden oder sogar aneinander stoßen. Eine vollkommene Abtrennung wird jedoch nur dann erreicht, wenn die Abtrennelemente mit ihren einander zugewandten Seiten überlappen.

Grundsätzlich können die Abtrennelemente in der verschiedensten Art ausgestaltet sein. Besonders vorteilhafte Ergebnisse werden jedoch erzielt, wenn die Abtrennwand von einer Vielzahl von Abtrennelementen gebildet wird, die jeweils als zungenartigen Lamellen ausgebildet und bei dieser Ausbildung jeweils im Bereich einer ihrer Schmalseiten eingespannt sind.

Grundsätzlich können die zungenartigen Lamellen in jeder beliebigen Weise ausgestaltet sein. Zweckmäßig ist es jedoch, die zungenartigen Lamellen rechteckig auszubilden.

Um eine möglichst vollkommene Abtrennung zu erzielen ist es vorteilhaft, wenn die zungenartigen Lamellen im Bereich ihrer Längsseiten überlappen.

In ihrer einfachsten Form bilden die Abtrennelemente lediglich eine einlagige Wand. Es kann jedoch auch zweckmäßig sein, die Abtrennelemente bzw. die Lamellen zwei- oder mehrlagig anzuordnen.

Bei hohen Durchtrittsgeschwindigkeiten zwischen dem ersten und dem zweiten Raum kann es insbesondere bei zungenartigen Lamellen zu Schwingungserscheinungen (Nachschwingen) kommen. Um derartige Schwingungserscheinungen zu reduzieren öder zu vermeiden, sind die verschiedensten Maßnahmen möglich. So kann es vorteilhaft sein, die Abtrennelemente bzw. die Lamellen in unterschiedlichen Längen vorzusehen. Auch können die Abtrennelemente bzw. Lamellen eine unterschiedliche Stärke aufweisen. Auch durch die Wahl unterschiedlicher Breiten ist es möglich, derartige Erscheinungen zu verringern.

Grundsätzlich eignet sich für die Abtrennelemente bzw. für die Lamellen jegliches biegsame Material. Eine besonders vorteilhafte Ausgestaltung wird jedoch erreicht, wenn die Abtrennelemente bzw. die Lamellen aus Federstahlblechstreifen bestehen.

Für die Funktion der erfindungsgemäßen Einrichtung spielt es keine Rolle in welcher Lage die Abtrennwand zwischen dem ersten und dem zweiten Raum angeordnet ist. Insbesondere für den Bereich der eingangs beschriebenen Werkzeugmaschine ist es jedoch vorteilhaft, dass der erste und der zweite Raum übereinander angeordnet sind und die Abtrennelemente bzw. Lamellen im wesentlichen horizontal ausgerichtet sind. Bei diesem Anwendungsbereich bildet der erste, unten liegende Raum den Bearbeitungsraum, während der zweite, darüber angeordnete Raum den Magazinraum enthält.

Im Folgenden sind zur weiteren Erläuterung und zum besseren Verständnis der Erfindung verschiedene Ausführungsbeispiele unter Bezugnahme auf die beigefügten Zeichnungen näher beschrieben und erläutert.
- Figur 1: zeigt schematisch in einer Vorderansicht eine Werkzeugmaschine mit zwei Arbeitsspindeln, die mit zwei erfindungsgemäßen Einrichtungen ausgestattet ist,
- Figuren 2 - 6: zeigen jeweils schematisch fünf verschiedene Ausführungsformen einer Abtrennwand der erfindungsgemäßen Einrichtung, wobei die Vorderansicht der Abtrennwand jeweils mit dem Buchstaben a, die Stirnansicht jeweils mit dem Buchstaben b und die Seitenansicht jeweils mit dem Buchstaben c gekennzeichnet sind.

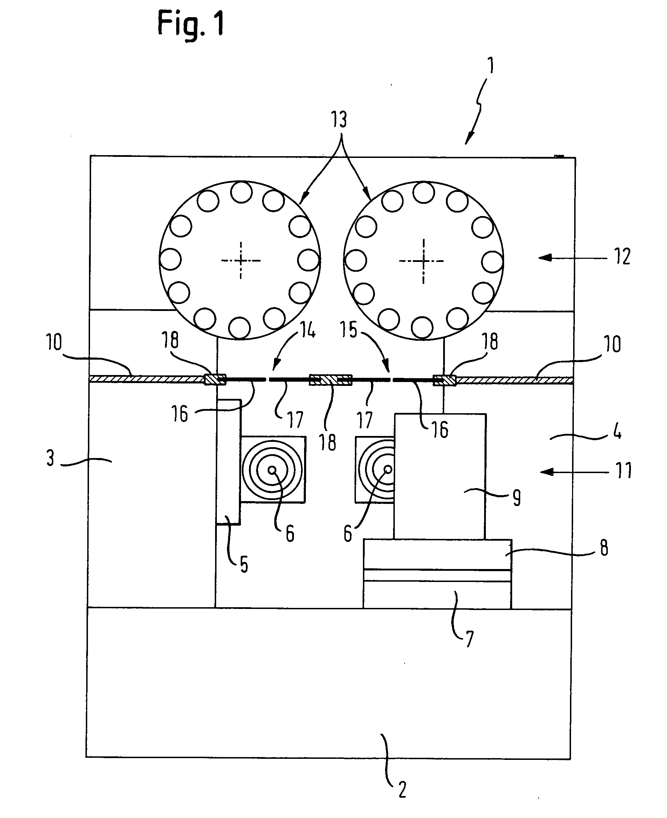

Die in Figur 1 lediglich mit ihren wesentlichen Elementen schematisch dargestellte Werkzeugmaschine 1 besitzt ein Maschinenbett 2, auf dem zwei Maschinenständer 3 und 4 aufgebaut sind.

Auf einander zugewandten Seiten sind an den Maschinenständern 3 und 4 Führungen 5 für Arbeitsspindeln 6 angeordnet. Die Arbeitsspindeln 6 sind an Führungen 5 in der sogenannten "Y-Achse" in bekannter Weise auf- und abbewegbar geführt.

Auf dem Maschinenbett 2 ist ferner ein Schlitten 7 angeordnet, der in der Zeichnungsebene hin- und herverfahrbar ist und einen Drehtisch 8 trägt, auf dem ein Werkstück 9 zur Bearbeitung durch die Arbeitsspindeln 6 aufgespannt ist.

Über dem Werkstück 9 ist in waagrechter Anordnung eine Abdeckung 10 angeordnet, die im vorliegenden Fall einen unten liegen ersten Raum 11, in dem die Bearbeitung des Werkstückes 9 stattfindet (Bearbeitungsraum), von einem zweiten Raum 12, in dem eine Werkzeugwechseleinrichtung 13 angeordnet ist (Magazinraum), abtrennt.

Die Abdeckung 10 ist im Bereich des vertikalen Verfahrweges der Arbeitsspindeln 6 mit zwei erfindungsgemäßen Einrichtungen 14 und 15 ausgestattet, wobei jede dieser Einrichtungen einer Arbeitsspindel zugeordnet ist. Die Einrichtungen 14 und 15 sind im vorliegenden Ausführungsbeispiel gleich ausgebildet und besitzen Abtrennelemente 16 und 17, die zusammen mit der Abdeckung 10 eine durchgehende Wandung bilden, welche den (Bearbeitungsraum) 11 vom Magazinraum 12 abtrennt.

Die Abtrennelemente 16 und 17 sind erfindungsgemäß aus einem biegsamen Material hergestellt und jeweils im Bereich ihrer einander zugewandten Seiten frei beweglich. Im Bereich ihrer diesen frei beweglichen Seiten entgegengesetzten Seiten sind sie jeweils in Haltern 18 eingespannt, wie dies in Figur 1 schematisch dargestellt ist.

Wird die jeweilige Arbeitsspindel 6 nach erfolgtem Bearbeitungsvorgang zum Werkzeugwechsel nach oben verfahren, so kommt sie in Berührung mit den Abtrennelementen 16 und 17, drückt diese nach oben, so dass ein Spalt freigegeben wird, der es der jeweiligen Arbeitsspindel zusammen mit dem Werkzeug ermöglicht, in den Magazinraum 12 zum Werkzeugwechsel einzutreten. Nach Durchlaufen der Abtrennelemente 16 und 17 gelangen diese aufgrund ihrer biegsamen Ausgestaltung in die in Figur 1 dargestellte Schließstellung zurück, so dass der Bearbeitungsraum 11 gegenüber dem Magazinraum 12 wieder verschlossen ist und weder anfallende Späne, noch Schmier- oder Kühlmittel vom Bearbeitungsraum 11 in den Magazinraum 12 gelangen kann.

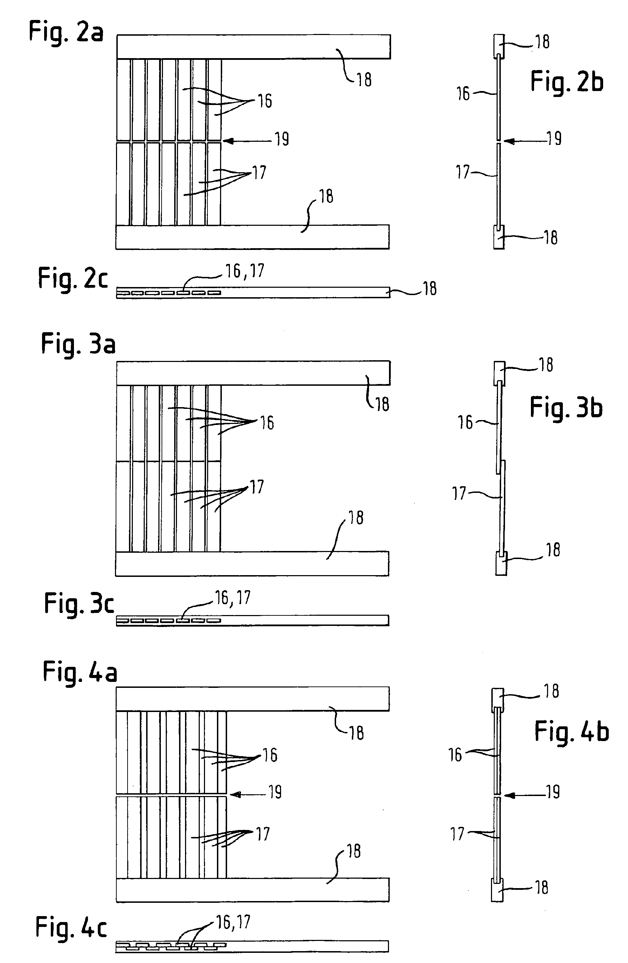

Wie bereits einleitend dargestellt, können die Abtrennelemente 16, 17 jeder Einrichtung 14 bzw. 15 jede beliebige auf den jeweiligen Anwendungsfall abgestimmte Form aufweisen. Auch kann sich die Anzahl der Abtrennelemente am entsprechenden Anwendungsfall orientieren. Eine besonders vorteilhafte und für eine Vielzahl von Anwendungsfällen geeignete Anordnung wird jedoch dann erreicht, wenn jede Einrichtung 14 bzw. 15 aus einer Vielzahl von Abtrennelementen 16, 17 besteht, die jeweils als zungenartige Lamellen ausgebildet und jeweils im Bereich ihrer Schmalseiten eingespannt sind. Fünf derartige Ausführungsformen mit jeweils rechteckig ausgebildeten zungenartigen Lamellen sind in den Figuren 2 - 6 dargestellt.

Wie sich aus den Figuren 2 - 6 ergibt, sind die als zungenartige Lamellen ausgebildeten Abtrennelemente 16, 17 in langgestreckten Haltern 18 eingespannt. Der besseren Übersichtlichkeit halber sind dabei in den Figuren 2 - 6 nicht alle zungenartigen Lamellen dargestellt.

Wie sich insbesondere aus den Stirnansichten 2b, 3b, 4b, 5b und 6b ergibt, unterscheiden sich die in den Figuren 2- 6 dargestellten Ausführungsbeispiele lediglich in der Art der Anordnung und Ausbildung der als Abtrennelemente 16, 17 wirkenden zungenartigen Lamellen.

So zeigen die Figuren 2a - 2c eine Ausführungsvariante, bei der die Abtrennelemente 16, 17 im Bereich ihrer einander zugewandten, frei beweglichen Seiten einen schmalen Spalt 19 bilden.

Bei der in den Figuren 3a - 3c dargestellten Ausführungsvariante dagegen überlappen die Abrennelemente mit ihren einander zugewandten, frei beweglichen Seiten, wie sich dies insbesondere aus Figur 3b ergibt.

Bei der in den Figuren 4a - 4c dargestellten Ausführungsvariante wiederum sind die Abrennelemente 16, 17 jeweils zweilagig ausgebildet. Dies hat den Vorteil, dass die Reibung zwischen den Lamellen das Nachschwingen nach dem Durchlaufen der Arbeitsspindel bzw. des Werkzeuges reduziert wird. Wie in der ersten Ausführungsvariante gemäß den Figuren 2a - 2c ist auch bei dieser Ausführungsvariante ein Spalt 19 vorgesehen. Allerdings sind die Abtrennelemente, wie Figur 4c zeigt, jeweils im Abstand voneinander angeordnet, wobei die eine Lage den Abstandsbereich der benachbarten Lage überdeckt.

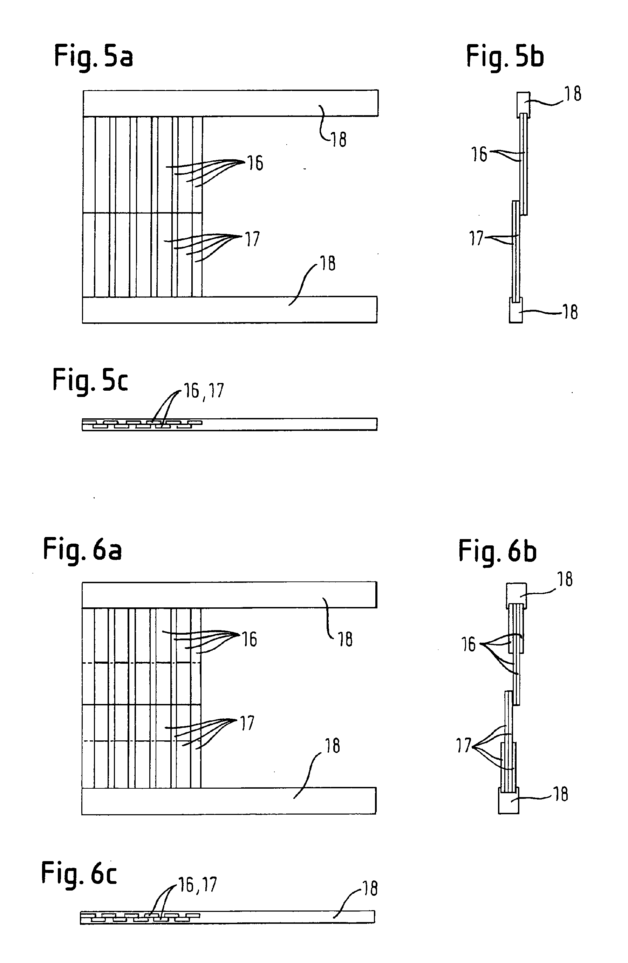

Bei der in den Figuren 5a - 5c dargestellten Ausführungsvariante sind die Abtrennelemente 16, 17 ebenfalls zweilagig angeordnet. Allerdings ist die Länge der Abtrennelemente derart bemessen, dass sie im Bereich ihrer frei beweglichen Enden überlappen. Dies erbringt den Vorteil, dass die Reibung zwischen den Abtrennelementen im Vergleich mit der Ausführungsvariante nach den Figuren 4a - 4c noch erhöht und infolge dessen das Nachschwingen nach dem Durchlauf der Arbeitsspindel bzw. des Werkzeuges noch weiter verringert wird.

Bei der in den Figuren 6a - 6c dargestellten Ausführungsvariante wurde eine vierlagige Anordnung der Abtrennelemente gewählt, wobei diese unterschiedliche Längen aufweisen. Auf diese Weise wird das Nachschwingen nach dem Durchfahren noch weiter reduziert, da die kürzeren Abtrennelemente die längeren Abtrennelemente abstützen.

Wie eingangs bereits erwähnt, können bei den gezeigten Anordnungen auch Lamellen unterschiedlicher Dicke vorgesehen werden. Dadurch ist die Schwingfrequenz der Abtrennelemente unterschiedlich, was ebenfalls zu einer Reduzierung des Nachschwingeffektes führt.

Die dargestellten Ausführungsvarianten stellen lediglich einige ausgewählte Ausführungsbeispiele von einer sehr großen Palette von möglichen Varianten dar. Weitere Varianten ergeben sich durch eine entsprechende Auswahl'des eingesetzten Materials. Bei einer besonders wenig zu Verschleiß neigenden Ausführungsvariante sind die Abtrennelemente (16, 17) bzw. die Lamellen aus Federstahlblechstreifen hergestellt.

## Patentansprüche

1. Einrichtung zum Abtrennen eines ersten Raumes (11) gegenüber einem angrenzenden zweiten Raum (12), umfassend mindestens zwei Abtrennelemente (16, 17), die von einer Schließstellung, in der sie im Wesentlichen eine Abtrennwand (14, 15) bilden, in eine Offenstellung und zurück bewegbar sind, **dadurch gekennzeichnet, dass** die Abtrennelemente (16, 17) biegsam ausgebildet, im Bereich ihrer einander zugewandten Seiten frei beweglich und im Bereich ihrer diesen Seiten entgegengesetzten Seiten eingespannt sind.

2. Einrichtung nach Anspruch 1, **dadurch gekennzeichnet, dass** die Abtrennelemente (16, 17) mit ihren einander zugewandten Seiten einen schmalen Spalt (19) bilden.

3. Einrichtung nach Anspruch 1, **dadurch gekennzeichnet, dass** die Abtrennelemente (16, 17) mit ihren einander zugewandten Seiten aneinander stoßen.

4. Einrichtung nach Anspruch 1, **dadurch gekennzeichnet, dass** die Abtrennelemente (16, 17) mit ihren einander zugewandten Seiten überlappen.

5. Einrichtung nach einem der Ansprüche 1 bis 4, **dadurch gekennzeichnet, dass** eine Vielzahl von Abtrennelementen (16, 17) vorgesehen ist, die als zungenartige Lamellen ausgebildet und jeweils im Bereich ihrer Schmalseiten eingespannt sind.

6. Einrichtung nach Anspruch 5, **dadurch gekennzeichnet, dass** die zungenartigen Lamellen rechteckig ausgebildet sind.

7. Einrichtung nach Anspruch 5 oder 6, **dadurch gekennzeichnet, dass** die zungenartigen Lamellen im Bereich ihrer Längsseiten überlappen.

8. Einrichtung nach einem oder mehreren der Ansprüche 1 - 7, **dadurch gekennzeichnet, dass** die Abtrennelemente (16, 17) bzw. Lamellen zweilagig angeordnet sind.

9. Einrichtung nach einem oder mehreren der Ansprüche 1 - 7, **dadurch gekennzeichnet, dass** die Abtrennelemente (16, 17) bzw. Lamellen mehrlagig angeordnet sind.

10. Einrichtung nach Anspruch 8 oder 9, **dadurch gekennzeichnet, dass** die Abtrennelemente (16, 17) bzw. Lamellen unterschiedliche Längen aufweisen.

11. Einrichtung nach einem oder mehreren der Patentansprüche 1 - 10, **dadurch gekennzeichnet, dass** die Abtrennelemente (16,17) bzw. Lamellen unterschiedliche Stärken aufweisen.

12. Einrichtung nach einem oder mehreren der Ansprüche 1 - 11, **dadurch gekennzeichnet, dass** die Abtrennelemente (16, 17) bzw. Lamellen unterschiedliche Breiten aufweisen.

13. Einrichtung nach einem oder mehreren der vorhergehenden Ansprüche 1 - 12, **dadurch gekennzeichnet, dass** die Abtrennelemente (16, 17) bzw. Lamellen aus Federstahlblechstreifen bestehen.

14. Einrichtung nach einem oder mehreren der vorhergehenden Ansprüche 1 - 13, **dadurch gekennzeichnet, dass** der erste (11) und der zweite Raum (12) übereinander angeordnet sind und die Abtrennelemente (16, 17) im wesentlichen horizontal ausgerichtet sind.

## Geänderte Patentansprüche

### Geänderte Patentansprüche gemäss Regel 86(2) EPÜ.

**1.** Einrichtung für Werkzeugmaschinen zum Abtrennen eines Bearbeitungsraumes (11) gegenüber einem angrenzenden Magazinraum (12), umfassend mindestens zwei Abtrennelemente (16, 17), die von einer Schließstellung, in der sie im Wesentlichen eine Abtrennwand (14, 15) bilden, in eine Offenstellung und zurück bewegbar sind, **dadurch gekennzeichnet, dass** die Abtrennelemente (16, 17) biegsam ausgebildet, im Bereich ihrer einander zugewandten Seiten frei beweglich und im Bereich ihrer diesen Seiten entgegengesetzten Seiten eingespannt sind.

**2.** Einrichtung nach Anspruch 1, **dadurch gekennzeichnet, dass** die Abtrennelemente (16, 17) mit ihren einander zugewandten Seiten einen schmalen Spalt (19) bilden.

**3.** Einrichtung nach Anspruch 1, **dadurch gekennzeichnet, dass** die Abtrennelemente (16, 17) mit ihren einander zugewandten Seiten aneinander stoßen.

**4.** Einrichtung nach Anspruch 1, **dadurch gekennzeichnet, dass** die Abtrennelemente (16, 17) mit ihren einander zugewandten Seiten überlappen.

**5.** Einrichtung nach einem der Ansprüche 1 bis 4, **dadurch gekennzeichnet, dass** eine Vielzahl von Abtrennelementen (16, 17) vorgesehen ist, die als zungenartige Lamellen ausgebildet und jeweils im Bereich ihrer Schmalseiten eingespannt sind.

**6.** Einrichtung nach Anspruch 5, **dadurch gekennzeichnet, dass** die zungenartigen Lamellen rechteckig ausgebildet sind.

**7.** Einrichtung nach Anspruch 5 oder 6, **dadurch gekennzeichnet, dass** die zungenartigen Lamellen im Bereich ihrer Längsseiten überlappen.

**8.** Einrichtung nach einem oder mehreren der Ansprüche 1 - 7, **dadurch gekennzeichnet, dass** die Abtrennelemente (16, 17) bzw. Lamellen zweilagig angeordnet sind.

**9.** Einrichtung nach einem oder mehreren der Ansprüche 1 - 7, **dadurch gekennzeichnet, dass** die Abtrennelemente (16, 17) bzw. Lamellen mehrlagig angeordnet sind.

**10.** Einrichtung nach Anspruch 8 oder 9, **dadurch gekennzeichnet, dass** die Abtrennelemente (16, 17) bzw. Lamellen unterschiedliche Längen aufweisen.

**11.** Einrichtung nach einem oder mehreren der Patentansprüche 1 - 10, **dadurch gekennzeichnet, dass** die Abtrennelemente (16,17) bzw. Lamellen unterschiedliche Stärken aufweisen.

**12.** Einrichtung nach einem oder mehreren der Ansprüche 1 - 11, **dadurch gekennzeichnet, dass** die Abtrennelemente (16, 17) bzw. Lamellen unterschiedliche Breiten aufweisen.

**13.** Einrichtung nach einem oder mehreren der vorhergehenden Ansprüche 1 - 12, **dadurch gekennzeichnet, dass** die Abtrennelemente (16, 17) bzw. Lamellen aus Federstahlblechstreifen bestehen.

**14.** Einrichtung nach einem oder mehreren der vorhergehenden Ansprüche 1 - 13, **dadurch gekennzeichnet, dass** der Bearbeitungsraum (11) und der Magazin (12) übereinander angeordnet sind und die Abtrennelemente (16, 17) im wesentlichen horizontal ausgerichtet sind.
